# DEMANDE DE BREVET EUROPEEN

(11) **EP 1 680 967 A1**
(43) Date de publication de la demande: **19.07.2006**
(21) Numéro de dépôt: 05100213.7
(22) Date de dépôt: 14.01.2005
(51) Int. Cl.: A23L 1/305, A23L 1/304, A23J 1/20, A23L 1/29

(54) **Compositions diététiques à base d'isolat de protéines solubles de lait**

(71) Demandeur: Forum Media Productions SPRL, 4020 Liège (BE)
(72) Inventeur: Zahouani, Abdelhadi, 92120, Montrouge (FR)
(74) Mandataire: Van Straaten, Joop

(57) **Abrégé**

La présente invention concerne une composition diététique protéinée comprenant un isolat de protéines solubles de lait natif incluant les acides aminés : tryptophane, valine, isoleucine, leucine, phénylalanine et tyrosine. L'isolat de protéine de lait est caractérisé en ce que le tryptophane représente entre 6 à 10% en poids des acides aminés neutres rassemblant l'ensemble des acides aminés leucine, isoleucine, valine, phénylalanine et tyrosine. La composition est particulièrement intéressante pour le traitement du surpoids et de l'obésité chez les mammifères.

## Description

### Domaine de l'invention

L'invention se rapporte à des compositions diététiques comprenant un isolat de protéines solubles de lait natif.

L'invention se rapporte également à l'utilisation d'un isolat de protéines solubles de lait natif pour la fabrication de compositions diététiques.

### État de la technique

Afin de lutter contre les phénomènes de surpoids ou d'obésité qui touchent particulièrement les populations occidentales, des solutions plus ou moins efficaces, demandant parfois un suivi médical, ont été proposées. On peut citer notamment les régimes équilibrés naturels qui sont élaborés par un médecin nutritionniste. Cependant ces régimes sont généralement longs, coûteux et fastidieux à suivre par le patient.

Il existe également les régimes protéiques ou diètes protéinées, notamment à base d'isolat de protéines de lait. Par exemple, le brevet US 4,576,932 décrit une préparation diététique comprenant du fructose, des protéines de lait obtenues par ultrafiltration du lait et de la gomme de guar. Afin d'améliorer sa saveur, la composition peut comprendre des parfums alimentaires tels que la vanille, la tomate ou le cacao.

Le brevet US 6,706,697, divulgue des compositions pour la préparation de boissons nutritionnelles favorisant la perte de poids. Ces compositions contiennent des protéines isolées de soja et de lait en mélange avec du fructose, des quantités mineures d'inuline, de gomme de guar et d'agent de saveur.

Ces diètes protéinées sont généralement utilisées dans le cadre d'un régime restrictif (moins de 600 kcal), ce qui rend difficile leur utilisation à long terme, en raison des phénomènes de « rebond » fréquents accompagnant la fin des régimes « très basses calories », suivis surtout sans contrôle médical.

### Résumé de l'invention

Un but de l'invention est de proposer une composition diététique qui procure une sensation de satiété améliorée par rapport aux compositions diététiques connues.

A cette fin, la composition diététique protéinée comprend un isolat de protéines solubles de lait natif, les protéines incluant les acides aminés :
(a) tryptophane ;
(b) valine ;
(c) isoleucine ;
(d) leucine ;
(e) phénylalanine ;
(f) tyrosine ;
l'isolat étant caractérisé en ce que le tryptophane représente entre 6 à 10% en poids des acides aminés neutres, les acides aminés neutres désignant l'ensemble des acides aminés leucine, isoleucine, valine, phénylalanine et tyrosine.

Ce rapport optimal favorise la production de sérotonine, neuromédiateur intervenant dans les phénomènes d'hypersensibilité immédiate (troubles du comportement) et dans la sensation de satiété. La production de sérotonine au niveau cérébral (hypothalamus) nécessite le passage du tryptophane à travers la barrière hémato-cérébrale, qui est conditionné par un ratio optimal tryptophane sur acides aminés neutres.

De préférence, le tryptophane représente entre 7 à 10% en poids, de manière plus préférée entre 7 à 8% en poids de l'ensemble des acides aminés neutres (leucine, isoleucine, valine, phénylalanine et tyrosine).

On désigne par le terme « natif », un lait n'ayant pas subi de traitement chimique, ni thermique sévère.

L'homme du métier comprendra que le vocable « lait » désigne ici tout liquide secrété par les glandes mammaires des femelles de mammifères. Par exemple il peut s'agir de lait de jument, de chèvre, de brebis ou de vache. Préférentiellement, on utilise comme produit de départ du lait de vache car sa composition en acides aminés permet l'obtention d'un isolat de protéines répondant le mieux au ratio recherché.

L'isolat de protéines solubles de lait, notamment celui de vache, est de préférence obtenu par des techniques de séparation membranaires. Par exemple, le lait de vache écrémé et natif subit une première étape de microfiltration afin d'éliminer les macroprotéines dont la caséine. Le perméat, issu de la microfiltration, subit un traitement membranaire d'ultrafiltation au cours duquel on récupère le rétentat contenant l'isolat de protéines selon l'invention.

Afin de faciliter sa manutention, son stockage et sa mise en oeuvre, l'isolat de protéines peut avantageusement subir une étape de séchage afin d'obtenir un produit sous forme solide, telle qu'une poudre.

De manière préférée, l'isolat de protéines solubles de lait comprend au moins 85% en poids de lactalbumine.

Un autre avantage lié à l'emploi d'isolat de protéines solubles de lait de vache réside dans le fait qu'il contient de fortes concentrations en acides aminés branchés favorisant une augmentation d'anabolisme via une synthèse protéique post-prandiale, ayant pour conséquence une hyper-aminoacidémie. Ces phénomènes permettent aux sujets de limiter la fonte de la masse maigre (représentée essentiellement par la masse musculaire) souvent observée lors d'un régime restrictif ou déséquilibré. En effet, la perte de poids pendant ces régimes se fait souvent aux dépens de la masse maigre.

Un autre avantage à utiliser un isolat de protéines solubles de lait de vache pour la fabrication de produits diététiques selon l'invention est qu'il procure à ladite composition un goût et une digestibilité améliorée par rapport aux compositions comprenant essentiellement des hydrolysats de protéines. En effet, les hydrolysats sont constitués surtout de peptides isolés, obtenus par hydrolyse chimique, dont le goût est extrêmement désagréable (amertume).

Cette fraction protéique de lait de vache à l'état natif présente une autre propriété avantageuse : notamment elle contient de la cystine bio-disponible, nécessaire à la production de glutathion. Le glutathion est un puissant peptide anti-oxydant constitué de 3 acides aminés : l'acide glutamique, la glycine et la cystéine. Or la biodisponibilité de la cystéine est considérée comme un facteur limitant de la production de glutathion, car elle est facilement dégradée par le système gastro-intestinal et le plasma sanguin. Par contre la cystine, dipeptide constitué de deux molécules de cystéine liées par un pont disulfure, est assimilable par l'organisme sans être dégradée. Ce dipeptide peut être réduit pas les cellules en libérant deux molécules de cystéine.

Un autre but de l'invention est de fournir une composition diététique qui permet en outre de réduire les effets du stress oxydatif, lié à une production excessive de radicaux libres chez le patient en surpoids ou obèse. En effet le stress oxydatif, par ses effets sur la fluidité membranaire, peut être responsable de diverses altérations fonctionnelles membranaires, comme par exemple la modification de l'affinité de certains récepteurs membranaires (récepteurs à insuline (IRS), récepteurs adipocytaire de la leptine) pour leurs ligands ou hormones. Ces troubles cellulaires sont responsables, en partie, chez certains sujets d'une résistance biochimique aux régimes d'amaigrissement.

A cette fin, la composition selon l'invention est de préférence caractérisée en ce qu'elle comprend en outre de la taurine.

La demanderesse a trouvé que les acides aminés composant l'isolat de protéines de lait agissaient en synergie avec la taurine pour prévenir divers dysfonctionnements métaboliques, tels que l'hyperlipidémie ou l'insulinorésistance.

La taurine et la cystéine contribuent à la réduction de la production d'acides gras en inhibant l'activité de l'acétyl-coenzyme A carboxylase, enzyme intervenant dans la synthèse d'acides gras.

La taurine en synergie avec l'acide glutamique, permet d'inhiber la production de cytokines TNF-alpha adipocytaires responsables du phénomène fréquent d'insulinorésistance observé chez des patients obèses ou en surpoids avec une adiposité viscérale.

La demanderesse a enfin observé que la L-glycine et la β-alanine contenues dans l'isolat de protéines solubles de lait contribuaient, de façon synergique avec la taurine, à la régulation des troubles cellulaires (dysfonctionnement endothélial) provoqués par le stress oxydatif, en augmentant la concentration en phospholipide et en réduisant l'accumulation du cholestérol dans les membranes cellulaires.

Il a été également trouvé que la taurine et la β-alanine stimulaient la thermogénèse en favorisant la synthèse d'ATP par les mitochondries. On entend désigner par le vocable « thermogénèse », la dépense métabolique liée aux processus de digestion, de stockage des aliments, de fonctionnement des organes et de maintien de la température en thermoneutralité.

De préférence, la composition diététique selon l'invention comprend en outre un glucide ou un mélange de glucides choisis parmi le xylitol et le D-ribose. Ces glucides ont la faculté d'être aisément assimilables par l'organisme et favorisent l'activité mitochondriale à travers la production d'ATP.

De façon préférée, la composition peut comprendre en outre un hydrolysat de peptides de lactosérum dont la fonction est d'induire une dépense énergétique post-prandiale chez le consommateur, via notamment la synthèse de protéines nécessaires au maintien de la masse maigre.

La composition peut également inclure de façon avantageuse des vitamines ou un mélange de vitamines choisies parmi la vitamine A, C, E, B1, B2, B3, B6, B9 ou H.

La composition selon l'invention peut comprendre également des minéraux, de préférence le magnésium et le chrome. Le magnésium intervient notamment dans la synthèse de sérotonine, tandis que le chrome est un élément qui entre en jeu dans les processus lipidiques et glucidiques.

Avantageusement, la composition pourra inclure des arômes alimentaires, de préférence naturels, tels que celui de la vanille, du cacao ou d'autres additifs alimentaires conventionnels tels que des colorants, des texturants ou des épaississants (gomme de guar ou de xanthane).

La composition diététique selon l'invention se présente avantageusement sous la forme d'une poudre que le consommateur dispersera dans un liquide, par exemple de l'eau, avant la consommation.

La composition selon l'invention comprendra de préférence, en poids :
■ 60 à 70% d'isolat de protéines solubles de lait ;
■ 0,5 à 1% de taurine ;
■ 0,5 à 2% de xylitol ;
■ 0,1 à 0,5% de D-ribose ;
■ 0,1 à 1% d'hydrolysat de lactosérum ;
le reste, en complément à 100%, étant représenté par des glucides (oligofructose, fructose), des arômes, des texturants, des vitamines et des minéraux.

De préférence, la composition diététique selon l'invention est utilisée dans le cadre d'un régime équilibré pour des sujets en surpoids ou obèses atteints d'adiposité abdominale, qui est une des responsables de l'apparition de syndromes métaboliques.

Ces aspects ainsi que d'autres aspects de l'invention seront clarifiés dans la description détaillée d'un mode de réalisation particulier de l'invention.

### Description détaillée d'un mode de réalisation particulier

### Exemple 1

Dans un mélangeur classique, on ajoute :
a) 60 g hydrolysat de protéines solubles de lait de vache, ayant la composition en acides aminés suivante (tableau 1):

| **Acide aminé** | **en g/100 g de la fraction protéinique** |
|---|---|
| Alanine | 4,8 |
| Arginine | 2,8 |
| Acide aspartique | 10,8 |
| Acide glutamique | 17,4 |
| Cystéine | 2,9 |
| Glycine | 2,1 |
| Histidine | 2,0 |
| **Isoleucine** | 4,7 |
| **Leucine** | 11,8 |
| Lysine | 9,4 |
| Méthionine | 2,2 |
| **Phénylalanine** | 3,5 |
| Proline | 4,8 |
| Sérine | 4,6 |
| Thréonine | 5,1 |
| **Tryptophane** | 2,0 |
| Tyrosine | 3,7 |
| **Valine** | 5,0 |
| Ratio (p/p)(Tryptophane/acides aminés neutres*) x 100 | 7 |

*Acides aminés neutres = isoleucine + leucine + phénylalanine + tyrosine + valine Tableau 1
b) 0,5 g de taurine
c) 0,1 g de D-ribose
d) 1 g de xylitol
e) 0,8 pg de chrome apporté sous forme de chlorure de chrome
f) 260 mg de magnésium sous forme de
g) 10 g de fructose
h) 1 g d'oligofructose
i) 22 g d'arôme naturel de cacao
j) 1 g de gomme de xanthane
k) 0,4 g d'un mélange de vitamines A, C, E, B1, B2, B3, B5, B6, B9, B12, H
1) 0,4 g d'aspartame

L'isolat de protéines solubles de lait de vache (sous forme sèche) utilisé est composé, en poids, de :
- 65% de β-lactalbumine ;
- 20% d'α-lactalbumine ;
- 5% d'immunoglobulines ;
- 3% de sérum d'albumine ;
- 1,2% de lactoferrine ;
le % restant incluant des sels minéraux, de la matière grasse, du lactose.

Les matières premières sont mélangées jusqu'à leur complète homogénéisation d'une façon classique et connue de l'homme du métier.

Le tableau 2 regroupe la valeur nutritive pour 100 g de composition arôme « cacao ».

| **ENERGIE** | |
|---|---|
| Kj | 1542 |
| Kcal | 363 |

| **VALEUR ANALYTIQUE MOYENNE CALCULEE** | | |
|---|---|---|
| Protéines | (g) | 62,7 |
| Glucides simples | (g) | 11,6 |
| Glucides complexes | (g) | 8,7 |
| Fibres | (g) | 6,1 |
| Lipides | (g) | 2,2 |

| **MINERAUX** | | |
|---|---|---|
| Sodium | (mg) | 722 |
| Potassium | (mg) | 1498 |
| Calcium | (mg) | 351 |
| Phosphore | (mg) | 290 |
| Magnésium | (mg) | 257 |

| **OLIGO ELEMENTS SUPPLEMENTES** | | |
|---|---|---|
| Chrome | (µg) | 0,8 |

| **VITAMINES SUPPLÉMENTÉES** | | |
|---|---|---|
| VITAMINE A | (µg) | 384 |
| VITAMINE C | (mg) | 28,8 |
| VITAMINE E | (mg) | 4,8 |
| VITAMINE B1 | (mg) | 0,67 |
| VITAMINE B2 | (mg) | 0,77 |
| VITAMINE B3 | (mg) | 8,6 |
| VITAMINE B5 | (mg) | 2,88 |
| VITAMINE B6 | (mg) | 0,96 |
| VITAMINE B12 | (µg) | 0,48 |
| VITAMINE H/BIOTINE | (mg) | 0,07 |
| VIT.B9/ACIDE FOLIQUE | (µg) | 192 |

Le produit diététique est notamment destiné à la préparation extemporanée d'une boisson, obtenue par dilution dans un liquide, comme par exemple de l'eau. Typiquement, 40 g de la composition diététique est dispersée vigoureusement dans 250 ml d'eau, au moyen par exemple d'un shaker ou d'un mixer. Optionnellement, le consommateur pourra tiédir la préparation avant de la consommer.

Cette préparation est à utiliser dans le cadre d'un régime équilibré apportant une ration calorique journalière allant de 1000, 1200 ou 1400 kcal chez des sujets en surpoids ou obèses atteints d'adiposité abdominale et dont la surcharge pondérale peut être responsable de l'augmentation de facteur de risque pour des pathologies telles que les maladies cardio-vasculaires, le cholestérol LDL, etc.

Il sera évident pour l'homme du métier que la présente invention n'est pas limitée à ce qui a été divulgué et décrit en particulier ci-dessus. L'invention réside dans la présentation de toutes les caractéristiques nouvelles et dans chaque combinaison de ces caractéristiques. Les références numériques dans les revendications, ne limitent pas la portée de leur protection. L'usage des verbes « comprendre, comporte ou inclure » et leurs formes conjuguées, n'exclut pas la présence d'autres éléments que ceux énumérés dans les revendications. L'usage de l'article « un/une » devant un élément, n'exclut pas la présence d'une pluralité de tels éléments.

La présente invention a été décrite en termes de réalisations spécifiques qui sont une illustration de l'invention et qui ne doivent pas être considérées comme limitatives.

En résumé, l'invention concerne une composition diététique protéinée comprenant un isolat de protéines solubles de lait natif incluant les acides aminés : tryptophane, valine, isoleucine, leucine, phénylalanine et tyrosine. L'isolat de protéine de lait soluble est caractérisé en ce que le tryptophane représente entre 6 à 10% en poids des acides aminés neutres rassemblant l'ensemble des acides aminés leucine, isoleucine, valine, phénylalanine et tyrosine. La composition est particulièrement intéressante pour le traitement du surpoids et de l'obésité chez les mammifères.

## Revendications

1. Composition diététique protéinée comprenant un isolat de protéines solubles de lait natif, les protéines solubles incluant les acides aminés :
(a) tryptophane ;
(b) valine ;
(c) isoleucine ;
(d) leucine ;
(e) phénylalanine ;
(f) tyrosine ;
l'isolat étant **caractérisé en ce que** le tryptophane représente entre 6 à 10% en poids des acides aminés neutres, les acide aminés neutres désignant l'ensemble des acides aminés leucine, isoleucine, valine, phénylalanine et tyrosine.

2. Composition diététique selon la revendication 1, **caractérisée en ce que** le lait est du lait de vache.

3. Composition diététique selon la revendication 1 ou 2, **caractérisée en ce que** le pourcentage en poids d'isolat de protéine solubles est compris entre 60 et 70%.

4. Composition diététique selon l'une quelconque des revendications 1 à 3, **caractérisée en ce qu'**elle comprend en outre de la taurine.

5. Composition diététique selon la revendication 4, **caractérisée en ce que** le pourcentage en poids de taurine est compris entre 0,5 et 1%.

6. Composition diététique selon l'une quelconque des revendications précédentes, **caractérisée en ce qu'**elle comprend en outre du D-ribose.

7. Composition diététique selon la revendication 6, **caractérisée en ce que** le pourcentage en poids de D-ribose est compris entre 0,1 et 0,5%.

8. Composition diététique selon l'une quelconque des revendications précédentes, **caractérisée en ce qu'**elle comprend en outre du xylitol.

9. Composition diététique selon la revendication 8, **caractérisée en ce que** le pourcentage en poids de xylitol est compris entre 0,5 et 2%.

10. Composition diététique selon l'une quelconque des revendications précédentes, **caractérisée en ce qu'**elle comprend en outre du chrome.

11. Composition diététique selon l'une quelconque des revendications précédentes, **caractérisée en ce qu'**elle comprend en outre un hydrolysat de lactosérum.

12. Utilisation d'un isolat de protéines solubles de lait natif, les protéines solubles incluant les acides aminés :
(a) tryptophane ;
(b) valine ;
(c) isoleucine ;
(d) leucine ;
(e) phénylalanine ;
(f) tyrosine ;
le tryptophane représentant entre 6 à 10% en poids des acides aminés neutres, les acide aminés neutres désignant l'ensemble des acides aminés leucine, isoleucine, valine, phénylalanine et tyrosine, pour la fabrication d'une composition diététique.
